# EUROPEAN PATENT SPECIFICATION

(11) **EP 0 309 235 B1**
(45) Date of publication and mention of the grant of the patent: **04.01.1995**
(21) Application number: 88308779.3
(22) Date of filing: 21.09.1988
(51) Int. Cl.: C11B 3/10, A23L 1/01

(54) **Extended use of filter aid in oil**
Verlängerter Gebrauch eines Filtrierhilfsmittels in Öl
Utilisation prolongée d'un agent filtrant dans l'huile

(30) Priority: 21.09.1987 US 99134
(43) Date of publication of application: 29.03.1989
(73) Proprietor: Oil Process Systems, Inc., Allentown Pennsylvania 18103 (US)
(72) Inventor: Friedman, Bernard, Allentown Pennsylvania 18104 (US)
(74) Representative: Beresford, Keith Denis Lewis

(56) References cited:
- WO-A-88/07821
- GB-A- 2 057 004
- GB-A- 2 127 035
- CHEMICAL ABSTRACTS, vol. 104, no. 15, April 1986, page 598, abstract no. 128658d, Columbus, Ohio, US; & JP-A-60 223 899

## Description

### Technical Field

The present invention relates to methods for frying foods. More particularly, the present invention relates to methods for controlling the quality of fats and oils during the food frying process. Still more particularly, the present invention relates to methods for controlling the quality of cooking oils generally comprising triglycerides during the food frying process. Still more particularly, the present invention relates to such methods for controlling food frying processes conducted in a batch-type operation.

### Background Art

A number of recognized processes exist for both the batch and continuous frying of various foods using cooking or frying oils. In each of these processes there is a recognized tendency for the oils which are used to decompose, forming various chemical products therefrom. These chemical products include free fatty acids, along with other impurities and contaminants, including food residue or "crumb" produced during this process itself, along with the products formed by the breakdown of the oils used and the interaction of the oils with food products added thereto. It is also known that in all of these processes the presence of these materials in the cooking oil, as well as the degradation of the oil itself, eventually results in degradation of the frying properties of the oil, until the oil is no longer useful.

A highly successful approach to the problems of the degradation of cooking oils, and the consequent poor cooking products produced thereby, is set forth in U.S. Patent No. 4,330,564 to Friedman. This patent discloses a fryer oil treatment utilizing expanded rhyolitic material and water, in amounts of from about 33 to 75 wt.% of the composition, for such treatment processes. This material is preferably used in combination with a food-compatible acid, and the particular process to which this patent is directed employs a system in which once treatment is completed the residue of the composition of that invention is removed from the treated oil by means well known in the art for this purpose, i.e. filtering. The oil is thus preferably filtered hot, and with a hand filter or a filter machine, and the cooking process is then permitted to continue. This patent thus discloses that in typical operations used cooking oil can be treated after each frying meal or at the end of each frying day. Filters useful in these inventions are also set forth in this patent, and include as a preferred filter one described in U.S. Patent No. 4,052,319.

This material has thus become highly significant in a commercial sense in connection with various batch-type processes which are generally used in the retail food industry in areas where used fryer cooking oil is mixed with the composition, including the porous carrier material, and the residue then filtered from the oil. The presence of the water in these compositions results in dispersion of the porous carrier material throughout the hot oil.

The use of these food-compatible acids was previously disclosed in Clewell, Jr. et al, U.S. Patent No. 3,947,602, disclosing the use of various absorbents, such as diatomaceous earth, activated carbon and the like, to remove contaminants from the used cooking oil, again in a process where filtration is employed in connection with the used oil.

The search has therefore continued for methods for improving the food frying processes, particularly in batch-type operations.

### Disclosure of Invention

In accordance with the present invention, these and other objects have now been realized by the applicant's discovery of a method of frying food including the steps of providing a supply of cooking fluid for use in a food frying process in a fryer apparatus, conducting said food frying process by frying said food in said supply of cooking fluid whereby degradation products comprising surfactants are produced in said cooking fluid and food residue accumulates in said fryer apparatus, and adding directly to said cooking fluid a treatment compound which is capable of selectively reducing the amount of said surfactants in the used cooking fluid, characterised in that said treatment compound is permitted to remain within said cooking fluid while food is being fried therein, and is also permitted to settle upon said food residue.

In accordance with one embodiment of the method of the present invention, the method includes intermittently adding the treatment compound to the used cooking fluid while continuing the food frying process. In a preferred embodiment, the method includes removing the used cooking fluid, the food residue and the treatment compound from the frying apparatus at the termination of food frying process. In a more preferred embodiment, the method also includes separating the used cooking fluid from the food residue and the treatment compound, and returning the used cooking fluid to the frying apparatus for continuing the food frying process.

### Brief Description of Drawings

The following detailed description of the present invention can be more fully appreciated with reference to the Figure, in which:

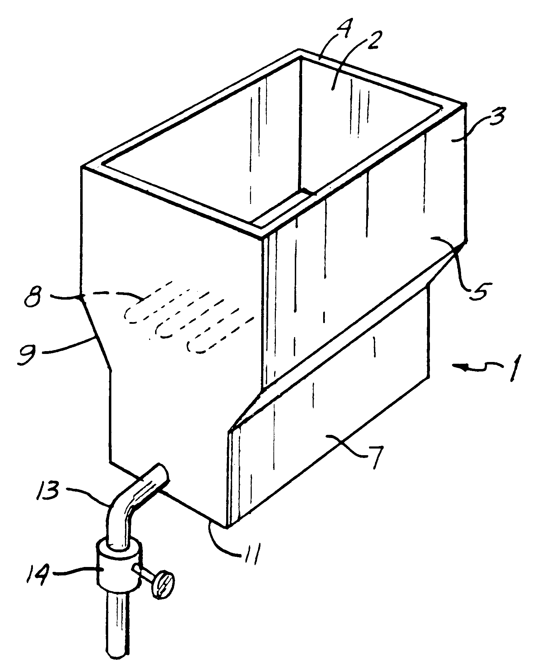

FIG. 1 is a front, elevational, prospective drawing of a fryer apparatus used in accordance with the method of the present invention.

### Best Mode of Carrying Out Invention

The treatment compound which is disclosed in U.S. Patent No. 4,330,564 and which comprises water, food-compatible acid and porous rhyolite or perlite carrier, is disclosed for use in direct contact with used hot cooking oil. It is thus stated in this patent that this composition removes or neutralizes the effect of certain undesirable impurities from the used cooking oil, such as soluble food juices and fatty acids which have an adverse effect on the cooking oil, particularly with respect to its useful lifetime and cooking characteristics. This patent also discloses that these compositions provide easy filtration once treatment has been completed, and that in fact there is no absolute need for the filter cake or filter machine with the composition of the invention, but rather a simple hand filtration is all that is required. This patent strictly discloses and claims, however, that upon filtration the treated oil can then be used for further cooking.

In accordance with the present invention, however, it has now been discovered that these types of treatment compositions, which have now been found (as disclosed in co-pending U.S. Patent Serial No. 035,071, filed on April 6, 1987 and published as WO-A-8 807 821 which belongs to the state of the art by virtue of Article 54(3) EPC)) to reduce the presence of akaline contaminant materials (ACM's) in these systems and, in particular, to reduce the surfactant content of these cooking fluids or oils. This prior application thus included a recognition that there is continuous build-up of these ACM'S in these systems, and that the use of this composition to contact the used cooking oil for short periods of time can reverse this process. The application of this principle to batch-type systems is the subject of the present application. More particularly, in accordance with this method it has now been found that the use of filtration can be severely limited, and in fact in many cases eliminated entirely, by adding the treatment compound itself directly to the cooking apparatus in question and permitting it to remain therein, and that this can be done with a number of positive effects, and rather unexpectedly with no significant negative effects. Thus, apart from achieving its initial effect of reducing the presence of these ACM'S, and in particular reducing the content of the surfactants generated in the used oil so as to substantially increase the life of that oil, it has also now been quite unexpectedly found that the continued presence of the treatment compound in the cooking oil environment during further frying in the oil not only does not produce any negative side effects, but creates additional positive factors in the overall cooking process.

More particularly, during the frying process various food residues, sediments and "crumb" products are produced in the oil, and these tend to settle out into the bottom of the fryer apparatus. The continued presence of this food residue in the apparatus, however, can have a negative impact on the overall frying process, and upon the life of the oil. The sediment or crumb material can continue to circulate throughout the oil bath, thus continuing to have a negative impact on the various properties of the oil, as well as depositing on food therein. By employing the present process, however, and by thus applying the above-mentioned treatment compounds directly to the fryer bath, this negative impact is alleviated by the physical presence of the treatment compound on top of the food residue or crumb sediment at the bottom of the fryer apparatus. This in itself further contributes to the life of the oil during the cooking process.

Furthermore, by employing the present method and leaving the treatment compound within the oil bath during continued food processing or frying, the residual activity of the treatment compound itself is fully utilized. Thus, the essential characteristic of this treatment compound in terms of preventing build-up of deposits on the inside of fryer pots, and the consequent establishment of a cleaner and more efficient frying process, the provision of oleophobic properties with food thus allowing the production of fried food products therein without the oily residue previously found on such products, diminishing the effect of certain colored materials from used cooking oils, the possible removal of toxic materials therefrom, and the overall increase of the life of the cooking oil used therein, is accomplished to a maximum degree by retention of the treatment compound within the oil during the extended food frying process.

It has also unexpectedly been found that the presence of this treatment compound, which is preferably in the form of a treatment powder, does not have an adverse effect on the food product which is produced therein. This is contrary to what one of ordinary skill in this art would have expected. It would thus have been expected that the presence of this powder material within the cooking oil would result in the undesirable deposition of a sandy powder or "grit" on the surface of the food, but in fact this is found not to be the case. Not wishing to be bound by any particular theory of the mechanism with which this is avoided, it is believed that the treatment compound not only primarily settles to the bottom of the frying apparatus, but that in addition any floating or suspended particles of the treatment compound contained within the bath are propelled away from the frying food by water and other food juices which are purged from the food during heating within the frying oil. In addition, residual fines floating at the surface of the oil are moved by the effects of surface tension to the meniscus of the oil at the fryer's walls and adhere thereto out of the active frying system.

This benefit of utilizing the method of the present invention is more fully realized if it is conducted intermittently throughout the entire food frying process until that process is terminated on a batch basis. Thus, upon each additional supply of treatment compound to the used cooking oil further advantage is taken of the settlement of the treatment compound or powder upon the food residue or crumb material at the bottom of the fryer apparatus, thus further preventing these food residues from rising in the oil due to agitation or convective forces within the oil.

The overall effect of this process is to thus reduce the need for frequency of filtering, or in fact to eliminate filtering altogether, so that one can simply discard the oil when it has been exhausted, and at the same time realize all of the other beneficial effects of these treatment compounds as previously described.

Turning to the Figure, a typical batch fryer vat 1 is shown therein. Such a vat includes an upper useful cooking area 3, which is generally rectangular in configuration which includes an upper opening 2, defined by rectangular rim 4. The cooking area extends downwardly to a lower portion 5, at which level within the vat heating coils 8 are generally maintained, which are not actually shown in the Figure, but are represented by the dotted lines in the Figure. The vat itself, however, continues downwardly from that level into a cold well area 7, which is generally connected by tapered wall portions 9 to the lower portion 5 of the vat 1, and which terminate in bottom or base 11 extending therealong. The entire vat 1 can then be filled with cooking fluid or oil, including both the cold well portion 7 and the main cooking portion 3, and by activation of the heating coil 8 the oil can be brought to cooking temperature, so that food can enter through the upper opening 2 and be placed into the cooking oil, generally being maintained in that position by a basket or screen which is mounted on the rim 4 while the food is cooked within the oil bath.

A drain or spigot 13 generally extends from the cold well 7 near the base 11, and the spigot 3 includes a valve 14, so that when desired the oil, along with food residue and other materials within the fryer vat, can be removed therefrom.

During the food processing itself food residue which breaks off from the food within the basket mounted within the fryer vat 1 will generally fall downwardly into the cold well 7 and be retained therein, while pieces of the residue or crumb material can circulate within the bath during further use. In accordance with the present method, however, after removal of the food basket, the treatment compound of the present invention can be added directly into the oil through the opening 2 to contact the used and heated oil within the bath. It can thus accomplish its primary purpose of improving the quality of the oil and reducing the ACM'S and surfactants therein, and then settle downwardly to cover the food residue or crumb material at the bottom of the cold well 7 along the bottom wall 11 thereof. This process can be repeated intermittently throughout the cooking process, that is as additional batches of food are fried in the oil by being placed in the upper portion 3 thereof, by the addition of further amounts of treatment compound after predetermined periods of use. In each such case the presence of the treatment compound will further inhibit the recirculation of additional food residue which has gathered along the bottom wall 11 of the fryer vat itself.

It is generally preferred that there be a cold well 7 below the heater coils or other heating apparatus within the oil. It is preferred that there thus be some distance between the bottom wall 11 and the heating coils to permit the build-up of food residue, and in accordance with the present invention the application of treatment compound thereon. It is thus not desirable that this entire space be taken up by these solid materials so that they eventually come into direct contact with the heating coils. Thus in those systems without a cold well, or with a small distance between the bottom wall 11 and the heating coil 8, it would be desirable to drain the fryer vat more frequently. The reason for this is that contact with the solid material or overlying of the crumb and/or treatment powder can result in burning out the heaters themselves, or in any event promote the formation of pyrolysis products within the sediment, which can be harmful. After this predetermined period of time, the vat 1 can thus be drained through the spigot 13 and valve 14 (if available), so that the used oil along with the food residue or crumb material and the used treatment powder exits from the fryer vat. This material can be collected, and either by centrifugation, filtration or other means, the used oil can be separated from the solids therein, which can then be discarded. The used oil can then be returned to the fryer vat 1 for further service. In this manner, the longer life of the oil as accomplished by using the treatment compounds of this invention is fully taken advantage of without the need for constant or immediate filtering, and again in many cases with a complete elimination of the filtering process itself. The consequence of considerable savings in time and labor which result from use of this method can be a significant advantage to the user.

As for the treatment compound itself, this is a material which is capable of selectively but not necessarily exclusively reducing the ACM or surfactant content of the oil, and in most preferred form is presently an active filter aid designated LIFE, which comprises a non-alkaline, non-dusting, non-irritating powder material which is designed to remove or control the surfactants formed during use of drying oils. It is believed that this powder material slows the degradation of heated oils by slowing down the hydrolysis and rate of oxidation of the oil along with the subsequent development of surfactant and/or precursors species therein.

The LIFE (or otherwise branded) powder material itself consists of an expanded, rhyolitic, obsidian perlite material with an amorphous silicate structure. Furthermore, the powder compositions employed herein comprise the porous rhyolite carrier and water, and preferably sufficient water so that when contacted with hot fats and oils above the boiling point of water the water steams and disperses the composition throughout the oil. Thus, the composition preferably contains from about 33 to about 75 wt. % water. In a preferred embodiment the composition comprises the porous carrier, water, and a food compatible acid, such as citric acid, tartaric acid, acetic acid, phosphoric acid, malic acid and mixtures thereof, with the preferred food compatible acid being citric acid. The overall composition preferably contains between about 2 and 10 wt. % of the food compatible acid, and more preferably between about 4 and 6 wt. % thereof.

The rhyolitic materials themselves are rendered "expanded" or porous by methods well known in the art, such as by heat expansion. Thus, these rhyolitic materials are initially heated to remove substantially all of the free moisture content, and the dried material is then directed to a "popper" where it is exposed to the flame of a gas jet at temperatures generally in the range of about 1480°C. The rhyolite material is then allowed to expand to produce the porous rhyolite carrier material used in this invention, which generally has a low density and a spherical shape. Preferably, the material has sizes in the ranges of from about 8 to about 120 mesh, more preferably from about 20 to about 80 mesh, and most preferably from about 40 to about 60 mesh. The porous spheres act as carriers both for the water and, when used, the food compatible acid such as the citric acid into the hot fryer oil. An average analysis of this inorganic material, which is of a variable composition due to its natural formation, includes a compositional analysis on a percentage basis as follows:

| | |
|---|---|
| Silica | 75.62% |
| Alumina | 12.02 |
| Ferric oxide | 2.36 |
| Calcium oxide | 0.83 |
| Magnesium oxide | 0.40 |
| Sodium oxide | 1.56 |
| Potassium oxide | 6.10 |
| Loss on Ignition | 0.91 |

There are a considerable number of other treatment powders which are being employed as filter aids in this industry. These include diatomaceous earth, which primarily comprises a silica powder material, and which is obtainable from various sources; a zeolitic and absorbent mineral base, FRYLIGHT, a product of Kaiser Aluminum Co.; a calcium and magnesium hydroxide material fused with diatomaceous earth, which is sold under the name MICROSWEET, a product of Manville Corporation; and a magnesium silicate material sold under the name MAGNESOL, a product of Reagent Chemical Research Inc. As has been discovered by applicants, however, from among these materials only the above-described rhyolitic material can successfully selectively reduce the ACM or surfactant content of the oil to substantively low amounts when used in accordance with the method of the present invention, and thus achieve the unexpected superior results hereof.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

### Industrial Applicability

The method of the present invention is useful for carrying out commercial batch food frying processes, and of enabling one to do so over larger periods of time, with better results, than has previously been the case.

## Claims

1. A method of frying food, the method including the steps of providing a supply of cooking fluid for use in a food frying process in a fryer apparatus, conducting said food frying process by frying said food in said supply of cooking fluid whereby degradation products comprising surfactants are produced in said cooking fluid and food residue accumulates in said fryer apparatus, and adding directly to said cooking fluid a treatment compound which is capable of selectively reducing the amount of said surfactants in the used cooking fluid, characterised in that said treatment compound is permitted to remain within said cooking fluid while food is being fried therein, and is also permitted to settle upon said food residue.

2. The method of claim 1, including intermittently adding said treatment compound to said used cooking fluid while continuing said food frying process.

3. The method of claim 1 or 2, including removing said used cooking fluid, said food residue, and said treatment compound from said frying apparatus at the termination of said food frying process.

4. The method of claim 3, including separating said used cooking fluid from said food residue and said treatment compound and returning said used cooking fluid to said fryer apparatus for continuing said food frying process thereafter.

5. The method of any one of claims 1 to 4, wherein said treatment compound is capable of selectively absorbing said surfactants thereonto.

6. The method of any one of claims 1 to 5, wherein said treatment compound is capable of selectively adsorbing said surfactants thereonto.

7. The method of any one of the preceding claims, wherein said treatment compound is a treatment powder.

8. The method of any one of the preceding claims, wherein said treatment compound comprises a porous rhyolitic material.

9. The method of claim 8, wherein said porous rhyolitic material includes between about 33 and 75 wt.% water.

10. The method of claim 8 or 9, wherein said treatment powder includes a food-compatible acid.

11. The method of claim 10, wherein said food-compatible acid comprises citric acid.

12. The method of any one of the preceding claims, including heating said cooking fluid in said fryer apparatus at a predetermined location within said fryer apparatus whereby said food residue accumulates at a location in said fryer apparatus below said predetermined location.

13. The method of any one of the preceding claims, wherein said cooking fluid comprises a cooking oil.

14. The method of claim 12 when dependant on claim 4, wherein the separation of said used cooking fluid from said food residue and said treatment compound is performed prior to said food residue and said treatment compound coming into direct contact with heating means at said predetermined location due to build-up thereof.

15. The method of any preceding claim, wherein said fryer apparatus is a batch-type fryer apparatus.

## Patentansprüche

1. Verfahren zum Fritieren von Speisen, mit den folgenden Schritten: Bereitstellen eines Vorrats an Kochfluid zur Verwendung in einem Speisefritierprozeß in einem Fritiergerät; Ausführen des Speisefritierprozesses durch Fritieren der Speise im genannten Vorrat an Kochfluid, wobei im Kochfluid Zersetzungsprodukte, zu denen oberflächenaktive Stoffe gehören, erzeugt werden und sich Speiserückstände im Fritiergerät ansammeln; und direktes Zugeben einer Behandlungsverbindung zum Kochfluid, die dazu in der Lage ist, die Menge oberflächenaktiver Stoffe im verwendeten Kochfluid selektiv zu verringern, **dadurch gekennzeichnet, daß** die Behandlungsverbindung im Kochfluid verbleiben kann, während in diesem Speisen fritiert werden, und sie sich auch auf die Speiserückstände absetzen kann.

2. Verfahren nach Anspruch 1, bei dem die Behandlungsverbindung dem gebrauchten Kochfluid intermittierend zugegeben wird, während der Speisefritierprozeß fortgeführt wird.

3. Verfahren nach einem der Ansprüche 1 oder 2, bei dem das gebrauchte Kochfluid, die Speiserückstände und die Behandlungsverbindung bei Beendigung des Speisefritierprozesses dem Fritiergerät entnommen werden.

4. Verfahren nach Anspruch 3, bei dem das gebrauchte Kochfluid von den Speiserückständen und der Behandlungsverbindung getrennt wird und das gebrauchte Kochfluid in das Fritiergerät zurückgegeben wird, um danach den Speisefritierprozeß fortzusetzen.

5. Verfahren nach einem der Ansprüche 1 bis 4, bei dem die Behandlungsverbindung die oberflächenaktiven Stoffe selektiv auf sich adsorbieren kann.

6. Verfahren nach einem der Ansprüche 1 bis 5, bei dem die Behandlungsverbindung die oberflächenaktiven Stoffe selektiv auf sich adsorbieren kann.

7. Verfahren nach einem der vorstehenden Ansprüche, bei dem die Behandlungsverbindung ein Behandlungspulver ist.

8. Verfahren nach einem der vorstehenden Ansprüche, bei dem die Behandlungsverbindung ein poröses, rhyolitisches Material enthält.

9. Verfahren nach Anspruch 8, bei dem das poröse, rhyolitische Material zwischen ungefähr 33 und 75 Gew.-% Wasser enthält.

10. Verfahren nach einem der Ansprüche 8 oder 9, bei dem das Behandlungspulver eine als Lebensmittel verwendbare Säure enthält.

11. Verfahren nach Anspruch 10, bei dem die als Lebensmittel verwendbare Säure Zitronensäure ist.

12. Verfahren nach einem der vorstehenden Ansprüche, bei dem das Kochfluid an einer vorgegebenen Stelle innerhalb des Fritiergeräts in demselben erwärmt wird, wobei sich die Speiserückstände an einer Stelle im Fritiergerät unter dieser vorgegebenen Stelle ansammeln.

13. Verfahren nach einem der vorstehenden Ansprüche, bei dem das Kochfluid ein Kochöl ist.

14. Verfahren nach Anspruch 12 in Abhängigkeit von Anspruch 4, bei dem das Abtrennen des gebrauchten Kochfluids von den Speiserückständen und der Behandlungsverbindung ausgeführt wird, bevor die Speiserückstände und die Behandlungsverbindung aufgrund eines Aufbaus derselben an der vorgegebenen Stelle in direkten Kontakt mit der Heizeinrichtung kommen.

15. Verfahren nach einem der vorstehenden Ansprüche, bei dem das Fritiergerät ein Chargen-Fritiergerät ist.

## Revendications

1. Procédé destiné à faire frire des aliments, le procédé comprenant les étapes consistant à prévoir l'amenée d'un fluide de cuisson lors de la friture d'aliments dans un appareil de friture, à effectuer la friture des aliments en faisant frire ceux-ci dans l'amenée de fluide de cuisson, les produits de dégradation comprenant alors des agents tensioactifs produits dans le fluide de cuisson et les résidus d'aliments s'accumulant dans l'appareil de friture, et à ajouter directement au fluide de cuisson un composé de traitement apte à réduire sélectivement la quantité des agents tensioactifs dans le fluide de cuisson utilisé, caractérisé en ce que l'on laisse le composé de traitement dans le fluide de cuisson pendant la friture des aliments dans celui-ci et en lui permettant également de se déposer sur les résidus d'aliments.

2. Procédé selon la revendication 1, consistant à ajouter par intermittence le composé de traitement au fluide de cuisson utilisé, tout en continuant à faire frire les aliments.

3. Procédé selon la revendication 1 ou 2, consistant à enlever de l'appareil de friture le fluide de cuisson, les résidus alimentaires et le composé de traitement à la fin de l'opération de friture des aliments.

4. Procédé selon la revendication 3, consistant à séparer le fluide de cuisson utilisé du résidu d'aliments et du composé de traitement et à renvoyer le fluide de cuisson utilisé dans l'appareil de friture pour poursuivre ensuite l'opération de friture des aliments.

5. Procédé selon l'une quelconque des revendications 1 à 4, dans lequel le composé de traitement est apte à absorber sélectivement les agents tensioactifs sur celui-ci.

6. Procédé selon l'une quelconque des revendications 1 à 5, dans lequel le composé de traitement est apte à absorber sélectivement les agents tensioactifs sur celui-ci.

7. Procédé selon l'une quelconque des revendications précédentes, dans lequel le composé de traitement est une poudre de traitement.

8. Procédé selon l'une quelconque des revendications précédentes, dans lequel le composé de traitement comprend un matériau rhyolitique poreux.

9. Procédé selon la revendication 8, dans lequel le matériau rhyolitique comprend entre environ 33 et 75% en poids d'eau.

10. Procédé selon la revendication 8 ou 9, dans lequel la poudre de traitement comprend un acide compatible du point de vue alimentaire.

11. Procédé selon la revendication 10, dans lequel l'acide compatible du point de vue alimentaire comprend de l'acide citrique.

12. Procédé selon l'une quelconque des revendications précédentes, incluant le chauffage du fluide de cuisson dans l'appareil de friture à un emplacement prédéterminé à l'intérieur de l'appareil de friture, de sorte que les résidus alimentaires s'accumulent en un emplacement dans l'appareil de friture situé au-dessous de cet emplacement prédéterminé.

13. Procédé selon l'une quelconque des revendications précédentes, dans lequel le fluide de cuisson comprend une huile de cuisson.

14. Procédé selon la revendication 12, lorsqu'elle est dépendante de la revendication 4, dans lequel la séparation du fluide de cuisson utilisé à partir du résidu alimentaire et du composé de traitement, s'effectue avant que les résidus alimentaires et le composé de traitement ne viennent en contact direct avec les moyens de chauffage à l'emplacement prédéterminé en raison de son accumulation.

15. Procédé selon la revendication précédente, dans lequel l'appareil de friture est un appareil de friture de type discontinu.
